# EUROPÄISCHE PATENTSCHRIFT

(11) **EP 0 735 381 B1**
(45) Veröffentlichungstag und Bekanntmachung des Hinweises auf die Patenterteilung: **09.01.2002**
(21) Anmeldenummer: 96101872.8
(22) Anmeldetag: 09.02.1996
(51) Int. Cl.: G01S 13/02, B61L 3/12, B61L 3/22

(54) **Verfahren und Kommunikationssystem zur Datenübertragung zwischen zwei Stationen**
Method and communication system for data transmission between two stations
Méthode et système de communication pour transmission des données entre deux stations

(30) Priorität: 29.03.1995 CH 88995
(43) Veröffentlichungstag der Anmeldung: 02.10.1996
(73) Patentinhaber: Siemens Schweiz AG, 8047 Zürich (CH)
(72) Erfinder: Windisch, Arthur, CH-8184 Bachenbülach (CH); Zünd, Urs, CH-8307 Effretikon (CH)
(74) Vertreter: Zedlitz, Peter, Dipl.-Inf.

(56) Entgegenhaltungen:
- EP-A- 0 424 664
- EP-A- 0 507 078
- EP-A- 0 768 540
- WO-A-94/11754
- WO-A-96/16856
- DE-A- 3 939 631
- DE-C- 3 040 080
- GERTLER F ET AL: "DAS ZUGBEEINFLUSSUNGSSYSTEM ZUB 123" SIGNAL + DRAHT, Bd. 86, Nr. 11, 1.November 1994, Seiten 361-366, XP000488002

## Beschreibung

Die vorliegende Erfindung betrifft ein Verfahren und ein Kommunikationssystem nach dem Oberbegriff des Patentanspruchs 1 bzw. 7.

Im Zusammenhang mit der Steuerung des öffentlichen und privaten Verkehrs gewinnt die Kommunikation zwischen Fahrzeugen und Kommunikationseinheiten, die entlang den befahrenen Verkehrswegen fest installiert sind, vermehrt an Bedeutung. Z. B. werden einem Fahrzeug Maximal- oder Leitwerte für die Geschwindigkeit oder der Status von Signalanlagen gemeldet. Bei derartigen Kommunikationssystemen, die z. B. aus der Offenlegungsschrift [2] bekannt sind, werden oft grössere Mengen von variablen Daten und wenige unveränderliche Daten übertragen. Variable Daten enthalten z.B. Informationen bezüglich der vorliegenden Signalbegriffe oder der momentan zulässigen Geschwindigkeiten. Der Aufwand zur Übertragung von variablen Daten von einem Verkehrsleitsystem zu einem Fahrzeug ist vergleichsweise hoch. Die unveränderlichen Daten, die bereits in der erdgebundenen Kommunikationseinheit abgelegt sind, können demgegenüber Informationen bezüglich der Identität der Kommunikationseinheit (Balisen, Transponder, etc.) enthalten. Aus [3] ist ferner die Verwendung von mehreren adressierbaren Streckentelegrammen bekannt, die in einer Gleiskoppelspule abgelegt sind. Bei einer Zugpassage kann ein einzelnes Telegramm abgerufen und an den vorbeifahrenden Zug übertragen werden. Aus Gründen der Sicherheit sind die zur Aufnahme der Telegramme vorgesehenen Speicherbausteine in jeder Gleiskoppelspule zweifach redundant vorgesehen. Damit diese Kommunikationssysteme ihre Arbeit dauerhaft erfüllen können und vereinzelt nicht selbst Gefährdungen hervorrufen, wird für diese Systeme ein hoher Sicherheitsstandard gefordert, der durch die Anwendung entsprechender Normen (z.B. PrEn50126, PrEn50127, PrEn50128, DIN 19250, Mü8004, etc.) erzielt und nachgewiesen werden kann. Der Aufwand zur Adressierung und fehlerfreien Übertragung eines einzelnen Telegramms ist daher beträchtlich. Zur Adressierung eines Telegramms muss die Adresse bei bekannten Systemen zudem in einem Zwischenspeicher abgelegt werden. Falls die im Zwischenspeicher abgelegte Information z.B. aufgrund einer defekten Datenleitung nicht korrekt aufdatiert wird oder der Speicherbaustein einen Defekt erleidet, besteht die Gefahr, dass anstelle der neuen die alte, nicht mehr gültige Signalisierungsinformation zum vorbeifahrenden Fahrzeug übertragen wird. Z. B. könnte dann anstelle des Signalbegriffs "HALT" der Signalbegriff "FAHRT" zum Fahrzeug übertragen werden.

Die Rate, mit der die Daten innerhalb des Kommunikationssystems zu übertragen sind, hängt primär von den vorhandenen Datenmengen sowie der Kontakt- bzw. Überdeckungszeit zwischen den lokal installierten Kommunikationseinheiten und den vorbeifahrenden Fahrzeugen ab. Bei höherer Durchfahrtsgeschwindigkeit von beispielsweise über 200 km/h und konstanter Kontaktlänge bzw. bei kürzerer Kontaktzeit wird eine gesteigerte Datenrate benötigt, um dieselbe Datenmenge zu übertragen. Zudem wird aus Sicherheits- und Verfügbarkeitsgründen dieselbe Meldung oft zwei- oder mehrmals übertragen. Kommunikationssysteme, die bei den geforderten Sicherheitsstandards Informationen mit einer genügende hohen Datenrate übertragen können, sind oft kaum oder nur mit hohen Investitionskosten realisierbar.

Gemäss einem in [1] offenbarten Verfahren ist jeder mögliche Signalbegriff in je einem Steuerungsdatensatz enthalten, der in zwei Festwertspeichern abgelegt ist. Diese beiden Steuerungsdatensätze unterscheiden sich nur durch eine Speicherkennung. Für einen bestimmten Signalbegriff wird jeweilen der zugehörige Steuerungsdatensatz unabhängig auf das Fahrzeug übertragen und nur dann weiter verwendet, wenn die dem Signalbegriff zugehörige Nutzinformation gleich und die Speicherkennung verschieden ist. Die Übertragung der Steuerungsdatensätze erfolgt mittels mit Linienleiterschleifen LL versehenen Antwortstationen zu einer auf einem Schienenfahrzeug angeordneten Abfragestation. Die Linienleiterschleifen LL sind längs zwischen den Schienen eines Geleises angeordnet sind. Die zu übertragende Nutzinformation wird in den auf der Streckenseite befindlichen Antwortstationen festgelegt.

Der vorliegenden Erfindung liegt daher die Aufgabe zugrunde, ein Verfahren sowie ein Kommunikationssystem anzugeben, durch die zwischen punktförmigen erdgebundenen und mobilen Kommunikationseinheiten Daten mit einer hohen Transferrate und einer reduzierten Fehlerwahrscheinlichkeit übertragen werden können. Darüber hinaus soll eine Auswahl von Nutzinformation - im folgenden Zustandsdaten genannt - auf der Fahrzeugseite möglich sein, beispielsweise gemäss der Kategorie des empfangenden Zuges (Güterzug, Neigezug).

Diese Aufgabe wird durch die im Patentanspruch 1 bzw. 7 angegebenen Massnahmen gelöst. Vorteilhafte Ausgestaltungen der Erfindung sind in weiteren Ansprüchen angegeben.

Das erfindungsgemässe Verfahren erlaubt die Übertragung von relativ grossen Datenmengen mit reduzierter Fehlerwahrscheinlichkeit. Auf eine Zwischenspeicherung von veränderlichen Daten kann verzichtet werden, wodurch damit zusammenhängende Fehlerquellen beseitigt werden. Das erfindungsgemässe Kommunikationssystem kann mit einem vergleichsweise geringen Aufwand installiert und unterhalten werden.

Durch die Verschiebung von Adressiereinheiten, die beim Stand der Technik in den erdgebundenen Kommunikationseinheiten eingesetzt werden, in die mobilen Kommunikationseinheiten reduziert sich ferner der Aufwand zur Herstellung und Wartung des Systems. In den erdgebundenen Kommunikationseinheiten reduziert sich dadurch ferner der Energiebedarf der erdgebundenen Kommunikationseinheiten, was insbesondere bei einer drahtlosen Speisung, bei Speisung über lange Leitungen oder bei der Entnahme der Energie aus Lampenstromkreisen von Signalen von Bedeutung ist.

Bei der erfindungsgemässen Verwendung von zwei oder mehreren einem Streckenpunkt zugeordneten erdgebundenen Kommunikationseinheiten ist durch weitere Ausgestaltungen der Erfindung ferner überprüfbar, ob Daten von einer fremden Kommunikationseinheit empfangen wurden, die in der Nähe, z.B. an einem benachbarten Verkehrsweg montiert ist. Weiterhin kann festgestellt werden, ob eine beim betreffenden Streckenpunkt montierte erdgebundene Kommunikationseinheit defekt oder nicht diesem Streckenpunkt zugehörig ist. Eine solche Konsistenzprüfung ist mit nur geringem Aufwand durchführbar.

Die Erfindung wird nachfolgend anhand einer Zeichnung beispielsweise näher erläutert. Dabei zeigt:
- Fig. 1: einen Zug bei der Fahrt über eine erdgebundene Kommunikationseinheit,
- Fig. 2: zwei Gruppen von Kommunikationseinheiten, die an verschiedenen Geleisen angeordnet sind,
- Fig. 3: an einem Streckenpunkt angeordnete und mit einem Verkehrsleitsystem verbundene Kommunikationseinheiten,
- Fig. 4: zwei an einem ersten Streckenpunkt angeordnete Kommunikationseinheiten und
- Fig. 5: drei an einem zweiten Streckenpunkt angeordnete Kommunikationseinheiten.

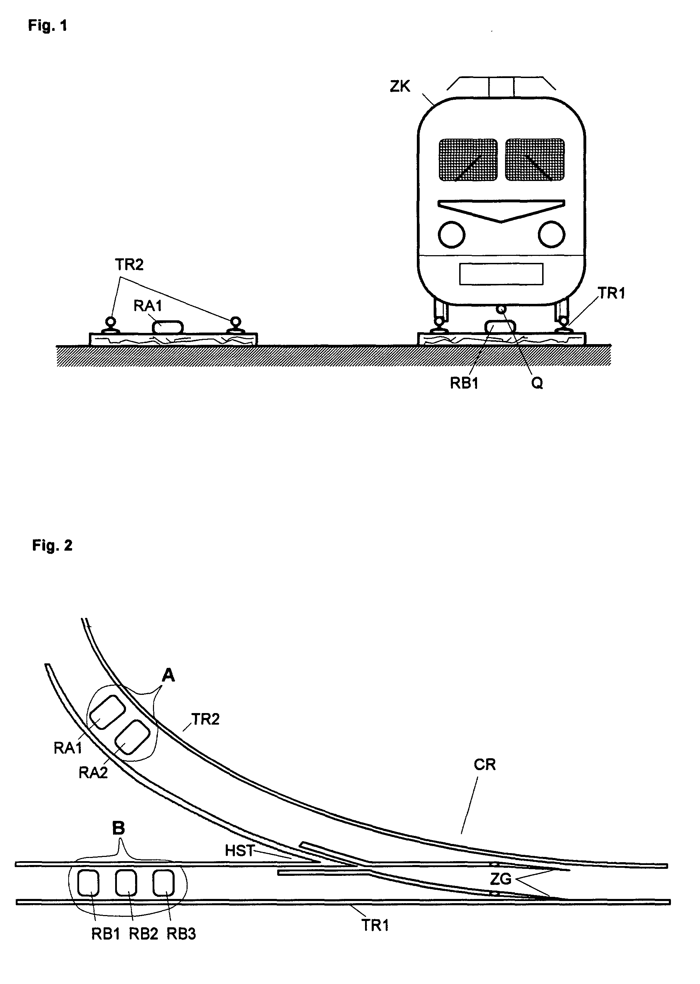

Fig. 1 zeigt zwei nebeneinander geführte Schienenpaare TR1, TR2. Auf den Schienen TR1 ist ein mit einer mobilen Kommunikationseinheit Q versehener Eisenbahnzug ZK geführt. Zwischen den Schienen TR1, TR2 sind erdgebundene Kommunikationseinheiten RA1 bzw. RB1 vorgesehen, die für den Datenaustausch mit den auf dem Schienenpaaren TR1, TR2 geführten Fahrzeugen ZK vorgesehen sind. Zur einfacheren Unterscheidung werden die mobilen Kommunikationseinheiten nachfolgend als Abfragestationen Q und die erdgebundenen Kommunikationseinheiten als Antwortstationen R bezeichnet. In der praktischen Anwendung werden Informationen oft nur von der Antwortstation R zur Abfragestation Q übertragen. Regelmässig kommt jedoch auch eine bidirektionale Übertragung von (Nutz-) Daten zwischen Abfrage- und Antwortstationen Q, R zur Anwendung.

Für die Kommunikation bzw. Datenübertragung zwischen den Abfrage- und Antwortstation Q, R sind mehrere dem Fachmann bekannte Verfahren anwendbar. Insbesondere sind dazu die von F. Gertler und H.-J. Stolzenberg [3] oder die in der WO 94/11754 [2] angegebenen Massnahmen geeignet. Gemäss der WO 94/11754 [2] wird von einer Abfragestation Q ein Abfragepuls an ein mit Interdigitalwandlern und Reflektoren versehenes Oberflächenbauteil OFW übertragen, das in einer Antwortstation R angeordnet ist. Entsprechend der Anordnung und/oder Programmierbarkeit der Reflektoren wird eine feste oder zumindest teilweise veränderliche Sequenz von Antwortimpulsen zur Abfragestation Q reflektiert. Durch Abfrageimpulse können Daten ferner aus Lese- oder Schreib-/Lesespeichern abgerufen und durch die Modulation eines Trägersignals zur Abfragestation Q übertragen werden.

Zur erfindungsgemässen Datenübertragung werden dabei jeweils immer mindestens drei verschiedene Datenblöcke von einem Streckenpunkt, der mindestens eine Antwortstation R aufweist, zur Abfragestation Q übermittelt. In mindestens einem dieser Datenblöcke sind Schlüssel enthalten, die in Abhängigkeit der an diesem Streckenpunkt momentan vorliegenden Daten und Zustände gewählt sind. Die Schlüssel können entweder in einem Speicher der Antwortstation R permanent abgelegt sein oder werden der Antwortstation R bevorzugt in Form von variablen Daten zugeführt. Entsprechend den Daten und Zuständen, die an einem Streckenpunkt möglicherweise auftreten können und/oder permanent vorliegen, werden in den weiteren Datenblöcken entsprechende feste Zustandsdaten vorgesehen. Die im Datenblock x enthaltenen Zustandsdaten beschreiben daher z.B. den Zustand des Streckenpunktes, bei dem eine zugehörige Signalisierung auf "Halt" gesetzt ist. Die im Datenblock x+1 enthaltenen Zustandsdaten beschreiben z.B. den Zustand des Streckenpunktes, bei dem die Signalisierung auf "Fahrt" gesetzt ist.

In den Schlüsseln sind daher Informationen enthalten, die es erlauben, in der Abfragestation Q die gültigen Zustandsdaten zu ermitteln. Zur Ermittlung der gültigen Zustandsdaten werden zwei alternativ wählbare Verfahren vorgesehen. Nach dem ersten Verfahren enthalten die Schlüssel eine Adressinformation, durch die in der Abfragestation Q der Datenblock mit den gültigen Zustandsdaten adressiert und ausgelesen werden kann. Nach dem zweiten Verfahren werden alle Zustandsdaten mit einem für jeden Datenblock individuell gewählten und dem System bekannten Schlüsseln codiert (z.B. EX-OR-verknüpft). Es wird anschliessend derjenige Schlüssel übertragen, der es erlaubt, in der Abfragestation Q die gültigen Zustandsdaten korrekt zu decodieren (z.B. durch die zweite EX-OR-Vernüpfung mit dem zugehörigen Schlüssel). In jedem mit Zustandsdaten gefüllten Datenblock müssen zudem noch Informationen enthalten sein, die es erlauben, festzustellen, ob ein mit Zustandsdaten gefüllter Datenblock korrekt decodiert wurde. Dazu werden z.B. in jedem mit Zustandsdaten gefüllten Datenblock eine Checksumme und/oder Start-/Stopinformationen vorgesehen. Nach der Decodierung wird in der Abfragestation Q daher geprüft, ob ein mit Zustandsdaten gefüllter Datenblock vorliegt, der eine korrekte Checksumme und/oder korrekte Start-/Stopinformationen aufweist. Als Checksumme wird hierin ein aus den übertragenen Daten gebildeter Wert verstanden, durch den die korrekte Übermittlung eines redundanten Codes durch Massnahmen, die dem Fachmann bekannt sind, überprüft werden kann. Eine oft praktizierte Massnahme ist die Zugabe eines Bit, welches die Anzahl der im Binärwort vorhandenen Einsen auf eine ungerade Zahl bringt. Ein solches Bit wird Schutz- oder Prüfbit (parity bit) genannt. Stellt der Empfänger in einem ankommenden Binärwort eine gerade Quersumme fest, so ist ein Fehler erkannt worden. Vorteilhaft im Hinblick auf die Fehlererkennung sind auch die sogenannten m-aus-n-Codes. Hierbei sind alle Binärwörter gleich lang (nämlich n bit), und alle enthalten gleich viele Einsen (nämlich m). Die Checksumme bzw. der Prüfwert, der durch Addition aller Datenbits des Binärwortes gebildet wird, entspricht daher bei korrekter Übermittlung dem Wert m.

Dem Streckenpunkt A; B wird daher jeweils ein Schlüssel zugeführt, der zu den zu übertragenden Daten korrespondiert, deren Datenmenge normalerweise um ein Vielfaches grösser ist als diejenige der Schlüssel. Aufgrund der geringen Menge variabler Daten bzw. Schlüssel kann auf eine Zwischenspeicherung derselben normalerweise verzichtet werden. Eine einem Signalbegriff entsprechender Schlüssel wird daher vorzugsweise bereits im Verkehrsleitsystem VLS gebildet und ohne Zwischenspeicherung transparent zur Abfragestation Q übermittelt.

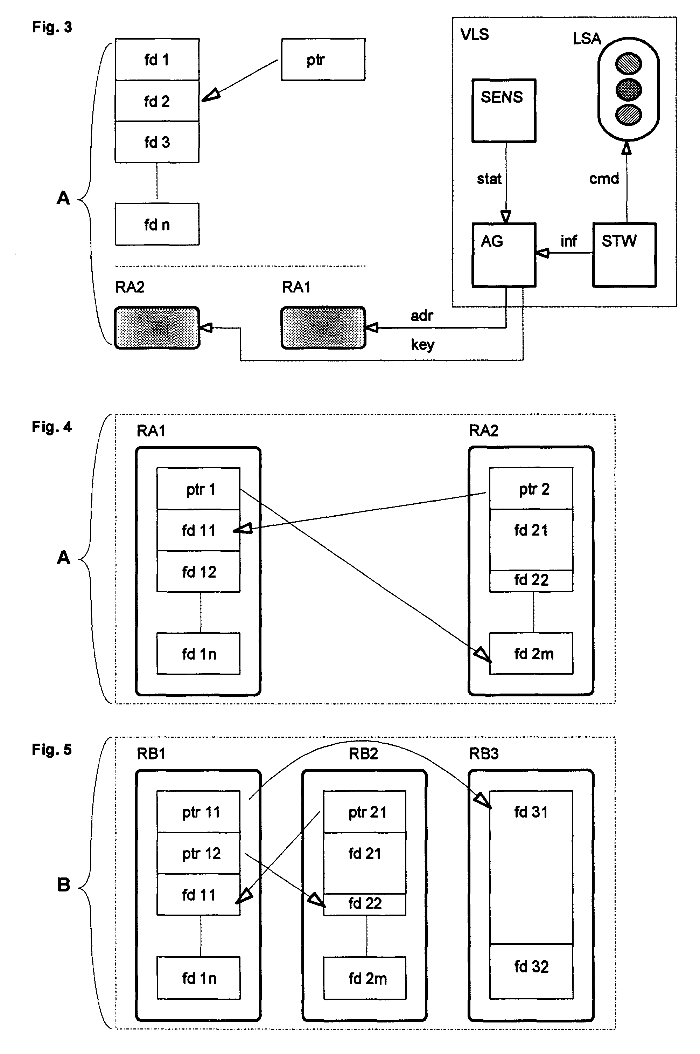

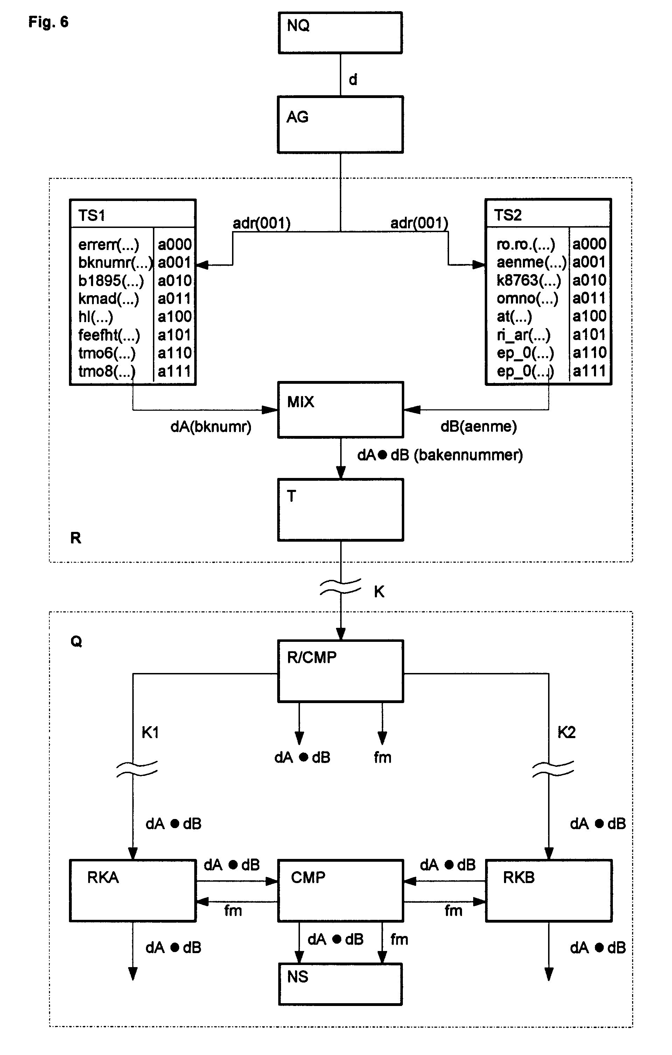

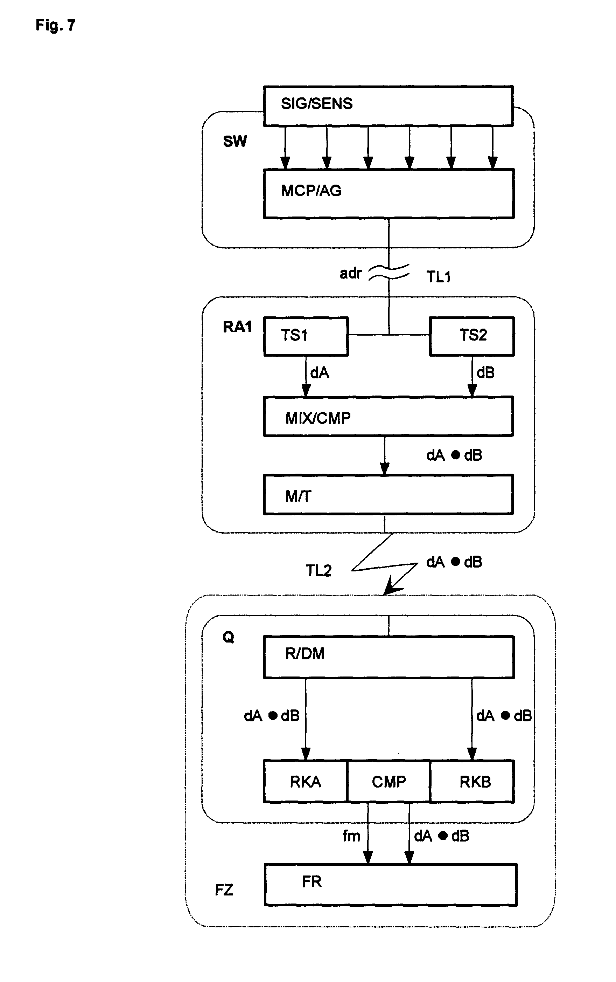

Vorzugsweise werden einem Streckenpunkt A bzw. B, wie in Fig. 2 dargestellt, zwei oder mehrere Antwortstationen RA1, RA2 (bzw. RB1, RB2, RB3) zugeordnet. Die zur Abgabe von Schlüsseln vorgesehene Antwortstation RA1 ist, wie in Fig. 3 gezeigt, über eine Datenleitung mit dem Verkehrsleitsystem VLS verbunden, das einen Adress- oder Schlüsselgenerator bzw. eine Codierlogik CL aufweist, der Meldungen und Statusinformationen inf, stat von einem mit einer Lichtsignalanlage LSA verbundenen Stellwerk STW, einem Sensor SENS und/oder weiteren dem Fachmann bekannten verkehrstechnischen Anlagen zugeführt werden. In Abhängigkeit der anliegenden Informationen inf, stat werden in der Codierlogik CL Adressen oder Schlüssel erzeugt, die zur Antwortstation RA1 und von dort vorzugsweise ohne Zwischenspeicherung zur Abfragestation Q übertragen werden. Die für die Sendeleistung benötigte Speisung der Antwortstation RA1 kann dabei über die Datenleitung adr oder über den Luftspalt von der Abfragestation Q erfolgen. Die entsprechenden Sendesignale werden periodisch oder auf Abruf ausgesendet. Zu den der Codierlogik CL zugeführten Meldungen und Statusinformationen inf, stat sind, wie bereits oben erwähnt, jeweils korrespondierende Informationen in den Zustandsdaten eines Datenblocks fd enthalten, der in der Antwortstation RA2 abgelegt ist. Von der Antwortstation RA1 wird in einem Datenblock ptr daher die Schlüsselinformation zu einem der in der Antwortstation RA2 enthaltenen, mit Zustandsdaten gefüllten Datenblöcke fd1, fd2, ..., fd n abgeschickt.

Wie in Fig. 4 und Fig 5 gezeigt, können auch in den Antwortstationen RA2 bzw. RB2 Datenblöcke mit Schlüsseln vorgesehen sein. Dies ist insbesondere dann sinnvoll, wenn eine möglichst grosse Datenmenge pro Antwortstation R übertragen werden soll. Da die Kontaktzeiten jeder Antwortstation R mit der Abfragestation Q bei der Durchfahrt des Fahrzeuges immer etwa gleich gross sind, werden die von allen Abfragestationen RA1, RA2 bzw. RB1, RB2, RB3 abgegebenen Datenmengen annähernd gleich gross gewählt. Zusätzlich zu dem mit (normalerweise variablen) Schlüsseln versehenen Datenblock ptr1 können in der Antwortstation RA1 daher noch mit Zustandsdaten versehene Datenblöcke fd11, fd12, ..., fd1n vorgesehen sein. Ein in der Antwortstation RA2 vorgesehener Datenblock ptr2 enthält daher die Schlüsselinformation, die zur Adressierung bzw. Identifizierung des entsprechenden in der Antwortstation RA1 enthaltenen, mit Zustandsdaten versehenen Datenblocks fd11; fd12; ..., bzw. fd1n. Zur Abfragestation Q werden daher alle Datenblöcke ptr1, fd11, ..., fd1n bzw. ptr2, fd21, ..., fd2m der Antwortstationen RA1 und RA2 gesandt. Aufgrund der in den übermittelten Datenblöcken ptr1, ptr2 enthaltenen Schlüsseln kann in der Abfragestation Q festgestellt werden, welche der übermittelten mit Zustandsdaten gefüllten Datenblöcke fd11, fd1n bzw. fd21, ..., fd2m die gültigen, zur Weiterverarbeitung vorgesehenen Informationen enthält. Dadurch erfolgt nebst der Übertragung von Daten auch die Prüfung der Konsistenz des Systems.

In der in Fig. 5 gezeigten Antwortstation RB1 sind zwei mit Schlüsseln versehene Datenblöcke ptr11, ptr12 vorgesehen, die zur Identifizierung von mit Zustandsdaten versehenen Datenblöcken fd21, ..., fd2m bzw. fd31 und fd32 dienen, welche in den weiteren Antwortstationen RB2 und RB3 abgelegt sind. In der Antwortstation RB2 ist ein weiterer mit Schlüsseln versehener Datenblock ptr21 vorgesehen, der zur Identifizierung von mit Zustandsdaten versehenen Datenblöcken fd1n, fd1n dient, welche in der Antwortstation RB1 abgelegt sind.

Einfachheitshalber werden alle mit Schlüsseln versehenen Datenblöcke ptr in einer einzigen Antwortstation R abgelegt bzw. einer einzigen Antwortstation R zugeführt und ohne Zwischenspeicherung ausgesendet. Dadurch muss nur diese eine Antwortstation R des Streckenpunktes mit dem Verkehrsleitsystem VLS verbunden sein. Trotzdem können mittels dieser Schlüssel alle Datenblöcke fd adressiert werden, die in den weiteren Antwortstationen R des Streckenpunktes abgelegt sind, ohne dass diese weiteren Antwortstationen R über Datenzuleitungen verfügen.

Von besonderem Vorteil ist daher, dass ein mit Zustandsdaten versehener Datenblock fd oder ein eingangs beschriebenes Telegramm nicht in den zahlreichen erdgebundenen Antwortstationen R, sondern in der mobilen Abfragestation Q adressiert bzw. identifiziert wird. Ein Fehler in der Adressier- oder Decodierlogik kann in der Abfragestation Q nämlich durch den Zugführer oder das Wartungspersonal in den Bahnhöfen problemlos behoben werden. Die Reparatur von erdgebundenen Antwortstationen R ist hingegen mit einem um ein Vielfaches höheren Aufwand verbunden. Zudem wird die Anzahl benötigter Adressier- bzw. Decodierlogikeinheiten auf einen Bruchteil reduziert, da die Abfragestationen Q viel weniger zahlreich sind als die Antwortstationen R. Das erfindungsgemässe Kommunikationssystem weist daher einen wesentlich geringeren Herstellungs- und Wartungsaufwand auf, als die aus dem Stand der Technik bekannten Systeme. Durch die Verschiebung der Adressier- oder Decodierlogik von den Antwortstationen R zur Abfragestation Q reduziert sich ferner der Bedarf an elektrischer Energie in den Antwortstationen R, die oft drahtlos, z.B. durch ein Trägersignal gespeist werden. Dadurch ergibt sich u.a. auch eine Erhöhung der Kontaktzeit der Stationen Q und R, da die ferngespeiste Antwortstation R bereits nach kurzer Zeit über die notwendigen Betriebsspannungen verfügt.

Mit der Verwendung von mehreren Antwortstationen R pro Streckenpunkt (z.B. RB1, RB2 und RB3 am Streckenpunkt B) entsteht die Gefahr, dass einzelne Antwortstationen R versehentlich vertauscht werden. Falls die in Fig. 2 gezeigten Streckenpunkte A und B gleichzeitig von einer Bautruppe installiert werden, könnten aufgrund einer Unachtsamkeit z.B. die Antwortstationen RA2 und RB2 vertauscht werden. Am Streckenpunkt B würden daher die Datenblöcke der Antwortstation RA2, die für den Streckenpunkt B nicht relevant sind, zur Abfragestation Q übertragen. In der in Fig. 5 dargestellten Situation würden daher die Daten des Datenblocks fd22 der Antwortstation RA2 anstelle der Daten des Datenblocks fd22 der Antwortstation RB2 in der Abfragestation Q weiterverarbeitet. Derartige unkorrekte Datenübertragungen, die zu einer Gefährdung der Verkehrsteilnehmer führen könnten, werden durch die nachfolgend beschriebenen Massnahmen vermieden. Nebst dem versehentlichen Vertauschen von einzelnen Antwortstationen R können Übertragungsfehler, die empfangsseitig festzustellen sind, auch durch Hardwaredefekte verursacht werden. Ebenso können Probleme entstehen, falls Datenblöcke von einer strekkenpunktfremden Antwortstation R zur Abfragestation Q übertragen werden.

Die Lösung des beschriebenen Problems gelingt durch die nachfolgend beschriebenen Massnahmen. Jedem der mit Zustandsdaten versehenen Datenblöcke fd wird ein eigener individueller Schlüssel zugeordnet, mit dem der Datenblock fd vor der Übertragung (z.B. EXOR-) verknüpft bzw. codiert wird. Die Zustandsdaten sind dabei vorzugsweise bereits in kodierter Form in den Datenblöcken fd enthalten. Anstelle der Übermittlung einer Adressinformation wird der den gültigen Zustandsdaten entsprechende Schlüssel in den Datenblock ptr eingefügt. Nach der Übertragung werden alle Datenblöcke fd in der Abfragestation Q mit dem im Datenblock ptr enthaltenen Schlüssel decodiert bzw. (EX-OR) verknüpft. Dabei wird nur der mit den gültigen Zustandsdaten versehene Datenblock fd korrekt decodiert. Alle weiteren Datenblöcke fd, die mit diesem für sie falschen Schlüssel verknüpft werden, enthalten daher keine sinnvolle Informationen mehr, mit der Ausnahme, dass anhand einer übertragenen Prüf- oder Checksumme eindeutig festgestellt werden kann, dass der Schlüssel zu ihnen nicht passt. Durch die Prüfung einer vorgesehenen Checksumme und/oder Start- / Stopinformationen kann daher der mit den gültigen Zustandsdaten versehene Datenblock fd eindeutig identifiziert werden. Falls der übertragene Schlüssel zu keinem der Zustandsdaten versehenen Datenblöcke fd passt, so wird in der Abfragestation Q ein Fehler registriert.

Ein von der Abfragestation Q detektierter Fehler wird dem Zugführer gemeldet, der die notwendigen Massnahmen ergreift und/oder es werden Befehle an die Steuerung des Antriebssystems abgegeben, durch die entsprechend vorgesehene Massnahmen ergriffen werden. Vorzugsweise wird der aufgetretene Fehler dem Zugführer mitgeteilt, wobei gleichzeitig eine Temporeduktion eingeleitet wird.

Nebst den Schlüsseln können mit den variablen Daten noch weitere Informationen übertragen werden. Z.B. können auch innerhalb eines Streckenpunktes A, B Sensoren vorgesehen sein, die den Zustand der Antwortstationen R überwachen und entsprechende Statusinformationen abgeben.

Die übertragenen Datenblöcke fd, ptr werden vorzugsweise alle mit mit Rahmen versehen. Das Rahmen der Daten erfolgt bevorzugt im Verkehrsleitsystem VLS, z.B. in einem der Codierlogik CL (siehe Fig. 3) nachgeschalteten Modul. Die Zustandsdaten können inklusive Datenrahmen zudem bereits in der entsprechenden Antwortstation R in einem Festwertspeicher abgelegt sein.

Die Reihenfolge der Übermittlung der ersten und zweiten Datenblöcke ptr, fd zur Abfragestation Q ist, abgesehen von nachstehender Ausnahme, nicht von Bedeutung. Wesentlich ist jedoch, dass die Datenblöcke ptr, die Schlüssel enthalten, als solche gekennzeichnet sind. Bei der Verwendung von wenigstens zwei Antwortstationen R kann ferner die Fahrtrichtung bestimmt werden. Dabei wird geprüft, von welcher Antwortstation R die Datenbläcke fd, ptr zuerst bei der Abfragestation Q eintreffen.

Ferner ist bekannt, dass Streckenabschnitte existieren, die fahrzeugspezifische Streckendaten aufweisen. Z.B. können für Güter-, Schnell- und Neigezüge verschiedene Höchstgeschwindigkeiten vorgesehen sein. Erfindungsgemäss wird daher jedem dem Kommunikationssystem zugehörigen Fahrzeug ein fahrzeugspezifischer Schlüssel zugeordnet. Der auf dem Fahrzeug mitgeführte Schlüssel wird dabei jeweils mit den Schlüsseln kombiniert, die in den ersten Datenblöcken ptr übertragen wurden. Erst mit diesem zusammengesetzten Schlüssel können anschliessend die in den zweiten Datenblöcken fd übermittelten Daten decodiert und die für den Streckenpunkt und das Fahrzeug gültigen Zustandsdaten identifiziert werden.

Der in den Fahrzeugen enthaltene (Teil-) Schlüssel kann auch zur Anpassung an verschiedene Streckensysteme vorgesehen sein, die gemeinsame Streckenabschnitte aufweisen. Falls ein Zugfahrzeug innerhalb des S-Bahn-Netzes einer Stadt eingesetzt wird, soll es an den betreffenden Streckenpunkten z.B. nur die diesbezüglichen Informationen erhalten. Falls das gleiche Fahrzeug zu einem andern Termin auf dem U-Bahn-Netz eingesetzt wird, soll es nur die das U-Bahn-Netz betreffenden Informationen erhalten. Ferner gewährt der fahrzeugspezifische Schlüssel eine Flexibilität, die es erlaubt, die Kompatibilität bei Systemmodifikationen zu wahren. Der im Zugfahrzeug vorgesehene Schlüssel kann daher fahrzeug-, streckennetz und/oder systemspezifisch gewählt sein.

### Literaturliste

- [1] EP 0 424 644 A2: Einrichtung zur Übertragung von Steuerungsinformation auf ein Schienenfahrzeug/Standard Elektrik Lorenz, DE-Stuttgart/ Veröffentlichungsdatum 2. Mai 1991.
- [2] WO 94/11754 A1: Verfahren und Schaltungsanordnung zur Datenübertragung zwischen zwei Stationen/Siemens-Albis AG/Veröffentlichungsdatum: 26. Mai 1994.
- [3] Signal + Draht 86(1994): November, Nr. 11, DE-Hamburg, Seiten 361 - 366: Das Zugbeeinflussungssystem ZUB 123, Frank Gertler, Hans-Joachim Stolzenberg.

## Patentansprüche

1. Verfähren zur Datenübertragung zwischen erdgebundenen Antwortstationen (R), die an Streckenpunkten eines Verkehrsweges angeordnet sind, und Abfragestationen (Q), die auf Fahrzeugen (ZK) angeordnet sind, **dadurch gekennzeichnet, dass** für einen einzelnen Streckenpunkt eine oder mehrere Antwortstationen (RB1, RB2, RB3) vorgesehen sind, die zur Abgabe von mindestens einem mit einem Schlüssel versehenen ersten Datenblock (ptr11, ptr12, ptr21) sowie mindestens zwei mit festen Zustandsdaten gefüllten zweiten Datenblöcken (fd11, ..., fd1n; fd21, ..., fd1m; fd31, fd32) vorgesehen sind, dass mittels der Schlüssel für jeden ersten Datenblock (ptr11, ptr12, ptr21) ein dazu korrespondierender zweiter Datenblock (fd11, ..., fd1n; fd21, ..., fd1m; fd31, fd32) oder darin enthaltene Zustandsdaten identifizierbar sind und dass diese als gültig erkannten Zustandsdaten nach der Übertragung der ersten und zweiten Datenblöcke (ptr11, ptr12, ptr21 ; fd11, ..., fd1n; fd21, ..., fd1m; fd31, fd32) anhand der vorliegenden Schlüssel in der Abfragestationen (Q) identifiziert und weiterverarbeitet werden.

2. Verfahren nach Anspruch 1, **dadurch gekennzeichnet, dass** die zur Abfragestation (Q) zu übertragenden Meldungen und Informationen (stat, inf), die von einem Stellwerk (STW), einem oder mehreren Sensoren (SENS) und/oder einer Lichtsignalanlage (LSA) stammen, einer Codierlogik (CL) zugeführt werden, welche die dazu korrespondierenden Schlüssel ermittelt und an die Antwortstation abgibt.

3. Verfahren nach Anspruch 2, **dadurch gekennzeichnet, dass** die mit einem Schlüssel versehenen Datenblöcke (ptr11, ptr12, ptr21) mit oder ohne Zwischenspeicherung in der zugehörigen Antwortstation (RB1; RB2) direkt oder auf Abruf der Abfragestation (Q) abgesendet werden.

4. Verfahren nach einem der Ansprüche 1 bis 3, **dadurch gekennzeichnet, dass** die Zustandsdaten mit einem für jeden zweiten Datenblock (fd11, ..., fd1n; fd21, ..., fd1m; fd31, fd32) individuellen Schlüssel codiert sind und dass in die ersten Datenblöcke (ptr11, ptr12, ptr21) derjenige Schlüssel eingefügt wird, durch den der Datenblock (fd11; ...; fd1n bzw. fd21; ...; fd1m bzw. fd31; fd32), der die gültigen Zustandsdaten enthält, auf der Abfragestation (Q) decodiert werden kann.

5. Verfahren nach Anspruch **4, dadurch gekennzeichnet, dass** in der Abfragestation (Q) ein Fehler erkannt wird, falls zu den von einer Antwortstation (RB1; RB2 bzw. RB3) übermittelten zweiten Datenblöcken (fd11, ..., fd1n; fd21, ..., fd1m; fd31, fd32) kein passender Schlüssel übermittelt wurde.

6. Verfahren nach einem der Ansprüche 1 bis 5, **dadurch gekennzeichnet, dass** in der Abfragestation (Q) ein fahrzeug-, streckennetz- und/oder systemspezifischer Schlüssel vorgesehen ist, der mit den übertragenen Schlüssel kombiniert oder verknüpft wird und dass die gültigen Zustandsdaten nach der Übertragung der ersten und zweiten Datenblöcke (ptr11, ptr12, ptr21 ; fd11, ..., fd1n; fd21, ..., fd1m; fd31, fd32) anhand der in der Abfragestationen (Q) zusammengesetzten Schlüssel identifiziert und weiterverarbeitet werden.

7. Kommunikationssystem zur Datenübertragung zwischen erdgebundenen Antwortstationen (R), die an Streckenpunkten eines Verkehrsweges angeordnet sind, und Abfragestationen (Q), die auf Fahrzeugen (ZK) angeordnet sind, **dadurch gekennzeichnet, dass** für einen einzelnen Streckenpunkt eine oder mehrere Antwortstationen (RB1, RB2, RB3) vorgesehen sind, die zur Abgabe von mindestens einem mit einem Schlüssel versehenen ersten Datenblock (ptr11, ptr12, ptr21) sowie mindestens zwei mit festen Zustandsdaten gefüllten zweiten Datenblöcken (fd11, ..., fd1n; fd21, ..., fd1m; fd31, fd32) vorgesehen sind, dass durch die ersten Datenblöcke (ptr11, ptr12, ptr21) Informationen übertragbar sind, durch die für jeden ersten Datenblock (ptr11, ptr12, ptr21) ein dazu korrespondierender zweiter Datenblock (fd11, ..., fd1n; fd21, ..., fd1m; fd31, fd32) oder darin enthaltene Zustandsdaten identifizierbar sind, dass die ersten und zweiten Datenblöcke (ptr11, ptr12, ptr21; fd11, ..., fd1n; fd21, ..., fd1m; fd31, fd32) in einem Festwertspeicher oder einem Oberflächenwellenbauteil gespeichert sind oder dass die in den ersten Datenblöcke (ptr11, ptr12, ptr21) zu übertragenden Schlüssel der betreffenden Antwortstation (RB1, RB2, RB3) als variable Daten zuführbar sind.

8. Kommunikationssystem nach Anspruch 7, **dadurch gekennzeichnet, dass** eine Codierlogik (CL) vorgesehen ist, der die zu übertragenden Information zuführbar sind und die zur Abgabe dazu korrespondierender Adress- oder Schlüsselinformationen adr; key vorgesehen ist, die mit den ersten Datenblöcken (ptr11, ptr12, ptr21) übertragen werden und dass die Codierlogik (CL), die vorzugsweise mit einem Stellwerk (STW), mit einem oder mehreren Sensoren (SENS) und/oder mit einer Signalanlage (LSA) verbunden ist, innerhalb einer für die ersten Datenblöcke (ptr) vorgesehenen Antwortstation (R) oder auf der Seite des Verkehrsleitsystems (VLS) angeordnet ist.

9. Kommunikationssystem nach Anspruch 7 oder 8, **dadurch gekennzeichnet, dass** die zweiten Datenblöcke (fd11, ..., fd1n; fd21, ..., fd1m; fd31, fd32) individuell codiert und dazu korrespondierenden Schlüsseln zugeordnet sind, von denen mindestens einer in Abhängigkeit der zu übertragenden Daten von der Codierlogik (CL) abgegeben und mit den ersten Datenblöcken (ptr11, ptr12, ptr21) zur Abfragestation (Q) übertragen wird.

10. Kommunikationssystem nach Anspruch 9, **dadurch gekennzeichnet, dass** in der Abfragestation (Q) Mittel vorgesehen sind, durch die ein Fehler erkennbar ist, falls zu den von einer Antwortstation (RB1; RB2 bzw. RB3) übermittelten zweiten Datenblöcken (fd11, ..., fd1n; fd21, ..., fd1m; fd31, fd32) kein passender Schlüssel übermittelt wurde.

11. Kommunikationssystem nach einem der Ansprüche 7 bis 10, **dadurch gekennzeichnet, dass** in der Abfragestation (Q) ein fahrzeug-, streckennetz- und/oder systemspezifischer Schlüssel vorgesehen ist, der mit den übertragenen Schlüsseldaten kombinierbar oder verknüpfbar ist und dass diese als gültig erkannten Zustandsdaten nach der Übertragung der ersten und zweiten Datenblöcke (ptr11, ptr12, ptr21 ; fd11, ..., fd1n; fd21, ..., fd1m; fd31, fd32) anhand der in der Abfragestationen (Q) zusammengesetzten Schlüssel identifizierbar sind.

## Claims

1. Method of data transfer between fixed transponders (R) installed at track locations along a route and interrogators (Q) installed on vehicles (ZK), **characterised in that**, for an individual track location, one or more transponders (RB1, RB2, RB3) are provided which are designed to transmit at least one initial data block (ptr11, ptr12, ptr21) containing a key and at least two second data blocks (fd11, ..., fd1n; fd21, ..., fd1m; fd31, fd32) filled with fixed status data, that for the initial data block (ptr11, ptr12, ptr21) a corresponding second data block (fd11, ..., fd1n; fd21, ..., fd1m; fd31, fd32) or status data contained therein is identifiable by means of the keys and that this validated status data is identified and further processed in the interrogator (Q) after transmission of the initial and second data blocks (ptr11, ptr12, ptr21 ; fd11, ..., fd1n; fd21, ..., fd1m; fd31, fd32).

2. Method according to Claim 1, **characterised in that** the messages and information (stat, inf) from a signal box (STW), one or more sensors (SENS) and/or a light signal apparatus (LSA) to be transmitted to the interrogator (Q) are fed to a coding logic (CL) which determines the corresponding keys and delivers them to the transponder.

3. Method according to Claim 2, **characterised in that** the data blocks (ptr11, ptr12, ptr21) containing a key are transmitted to the interrogator (Q) directly or when solicited, with or without buffering in the associated transponder (RB1; RB2).

4. Method according to one of Claims 1 to 3, **characterised in that** the status data is encoded using a separate key for each second data block (fd11, ..., fd1n; fd21, ..., fd1m; fd31, fd32) and that the key inserted in the initial data blocks (ptr11, ptr12, ptr21) is the one whereby the data block (fd11, ..., fd1n; fd21, ..., fd1m; fd31, fd32) containing the valid status data can be decoded at the interrogator (Q).

5. Method according to Claim 4, **characterised in that** an error is detected in the interrogator (Q) if no key matching the second data blocks (fd11, ..., fd1n; fd21, ..., fd1m; fd31, fd32) sent from a transponder (RB1; RB2 or RB3) has been transmitted.

6. Method according to one of Claims 1 to 5, **characterised in that**, in the interrogator (Q), a vehicle-, rail-network- and/or system-specific key is provided which is combined or logically linked with the transmitted keys and that the valid status data is identified and further processed using the keys assembled in the interrogator (Q) after transmission of the first and second data blocks (ptr11, ptr12, ptr21; fd11, ..., fd1n; fd21, ..., fd1m; fd31, fd32).

7. Communication system for data transfer between fixed transponders (R) installed at track locations along a route and interrogators (Q) installed on vehicles (ZK), **characterised in that**, for an individual track location, one or more transponders (RB1, RB2, RB3) are provided which are designed to transmit at least one initial data block (ptr11, ptr12, ptr21) containing a key and at least two second data blocks (fd11, ..., fd1n; fd21, ..., fd1m; fd31, fd32) filled with fixed status data, that information can be transmitted by the initial data blocks (ptr11, ptr12, ptr21), whereby for every initial data block (ptr11, ptr12, ptr21) a corresponding second data block (fd11, ..., fd1n; fd21, ..., fd1m; fd31, fd32) or status data contained therein is identifiable, that the initial and second data blocks (ptr11, ptr12, ptr21; fd11, ..., fd1n; fd21, ..., fd1m; fd31, fd32) are stored in a read-only memory or a surface acoustic wave device or that the keys to be transmitted in the initial data blocks (ptr11, ptr12, ptr21) can be fed to the relevant transponder (RB1, RB2, RB3) as variable data.

8. Communication system as claimed in Claim 7, **characterised in that** a coding logic (CL) is provided to which information to be transmitted can be fed and which is designed to deliver corresponding address and key information adr; key which is transmitted with the initial data blocks (ptr11, ptr12, ptr21), and that the coding logic (CL) which is preferably connected to a signal box (STW), to one or more sensors (SENS) and/or to a light signal apparatus (LSA) is installed within a transponder (R) containing the initial data blocks (ptr) or at the traffic management system (VLS) end.

9. Communication system as claimed in Claim 7 or 8, **characterised in that** the second data blocks (fd11, ..., fd1n; fd21, ..., fd1m; fd31, fd32) have been individually coded and assigned to corresponding keys, of which at least one is delivered by the coding logic (CL) depending on the data to be transmitted and is sent to the interrogator (Q) with the initial data blocks (ptr11, ptr12, ptr21).

10. Communication system as claimed in Claim 9, **characterised in that** means are provided in the interrogator (Q) whereby an error is detected if no key matching the second data blocks (fd11, ..., fd1n; fd21, ..., fd1m; fd31, fd32) transmitted from a transponder (RB1; RB2 or RB3) has been sent.

11. Communication system as claimed in Claims 7 to 10, **characterised in that**, in the interrogator (Q), a vehicle-, rail-network- and/or system-specific key is provided which can be combined or logically linked with the transmitted key data and that this validated status data can be identified using the keys assembled in the interrogator (Q) after transmission of the initial and second data blocks (ptr11, ptr12, ptr21 ; fd11, ..., fd1n; fd21, ..., fd1m; fd31, fd32).

## Revendications

1. Procédé de transmission de données entre des stations (R) de réponse au sol qui sont disposées en des points d'un trajet d'une voie d'acheminement de trafic et des stations (Q) d'interrogation qui sont disposées sur des véhicules (ZK), **caractérisé en ce qu'**il est prévu pour un point individuel du trajet une ou plusieurs stations (RB1, RB2, RB3) de réponse qui sont prévues pour la fourniture d'au moins un premier bloc (ptr11, ptr12, ptr21) de données muni d'un code ainsi que d'au moins deux deuxièmes blocs (fd11, ..., fd1n, ... fd21, ... fd1m ; fd31, fd32) de données remplis de données d'état fixes, **en ce qu'**il peut être identifié au moyen des codes pour chaque premier bloc (ptr11, ptr12, ptr21) des données un deuxième bloc (fd11, ..., fd1n ; fd21, ..., fd1m ; fd31, fd32) de données qui y correspond ou des données d'état qui y sont contenues et **en ce que** ces données d'état reconnues comme valables sont identifiées et traitées ultérieurement après la transmission des premier et deuxième blocs (ptr11, ptr12, ptr21 ; fd11, ..., fd1n ; fd21, ..., fd1m ; fd31, fd32) de données à l'aide des codes existants dans les stations (Q) d'interrogation.

2. Procédé suivant la revendication 1, **caractérisé en ce que** les messages et informations (stat, inf) à transmettre à la station (Q) d'interrogation qui proviennent d'un poste (STW) d'aiguillage, d'un ou plusieurs détecteurs (SENS) et/ou d'une installation (LSA) de signaux lumineux, sont envoyés à une logique (CL) de codage qui détermine les codes qui y correspondent et les fournit à la station de réponse.

3. Procédé suivant la revendication 2, **caractérisé en ce que** les blocs (ptr11, ptr12, ptr21) de données munies d'un code sont envoyés avec ou sans mise en mémoire intermédiaire dans la station (RB1 ; RB2) de réponse associée directement ou sur demande à la station (Q) d'interrogation.

4. Procédé suivant l'une des revendications 1 à 3, **caractérisé en ce que** les données d'état sont codées par un code individuel pour chaque deuxième bloc (fd11, ..., fd1n ; fd21, ..., fd1m ; fd31, fd32) de données et **en ce qu'**il est inséré dans les premiers blocs (ptr11, ptr12, ptr21) de données le code par lequel le bloc (fd11, ..., fd1n et fd21, ..., fd1m et fd31, fd32) de données qui contient les données d'état valables peut être décodé sur la station (Q) d'interrogation.

5. Procédé suivant la revendication 4, **caractérisé en ce qu'**il est reconnu une erreur dans la station (Q) d'interrogation dans le cas où il n'a pas été transmis de code convenant au deuxième bloc (fd11, ..., fd1n ; fd21, ..., fd1m ; fd31, fd32) de données transmis par une station (RB1 ; RB2 et RB3) de réponse.

6. Procédé suivant l'une des revendications 1 à 5, **caractérisé en ce qu'**il est prévu dans la station (Q) d'interrogation un code spécifique à un véhicule, au réseau du trajet et/ou au système qui est combiné ou lié au code transmis et **en ce que** les données d'état valables sont, après la transmission des premiers et des deuxièmes blocs (ptr11, ptr12, ptr21 ; fd11, ..., fd1n ; fd21, ..., fd1m ; fd31, fd32) de données, identifiées et traitées ultérieurement à l'aide des codes composés dans les stations (Q) d'interrogation.

7. Système de communication pour la transmission de données entre des stations (R) de réponse au sol qui sont disposées en des points du trajet d'une voie d'acheminement de trafic et des stations (Q) d'interrogation qui sont disposées sur des véhicules (ZK), **caractérisé en ce qu'**il est prévu pour un point individuel du trajet une ou plusieurs stations (RB1, RB2, RB3) de réponse qui sont prévues pour la fourniture d'au moins un premier bloc (ptr11, ptr12, ptr21) de données muni d'un code ainsi que d'au moins deux deuxièmes blocs (fd11, ..., fd1n, ... fd21, ... fd1m ; fd31, fd32) de données remplis de données d'état fixes, **en ce qu'**il peut être transmis par les premiers blocs (ptr11, ptr12, ptr21) de données des informations par lesquelles il peut être identifié pour chaque premier bloc (ptr11, ptr12, ptr21) de données un deuxième bloc (fd11, ..., fd1n ; fd21, ..., fd1m ; fd31, fd32) de données qui y correspond ou des données d'état qui y sont contenues, **en ce que** les premiers et deuxièmes blocs (ptr11, ptr12, ptr21 ; fd11, ..., fd1n ; fd21, ..., fd1m ; fd31, fd32) de données sont mis en mémoire dans une mémoire fixe ou dans un composant à ondes de surface ou **en ce que** les codes à transmettre dans les premiers blocs (ptr11, ptr12, ptr21) de données peuvent être envoyés comme données variables à la station (RB1, RB2, RB3) de réponse concernée.

8. Système de communication suivant la revendication 7, **caractérisé en ce qu'**il est prévu une logique (CL) de codage à laquelle l'information à transmettre peut être envoyée et qui est prévue pour la fourniture d'informations adr ; key d'adresse et de codage qui y correspondent et qui sont transmises par les premiers bloc (ptr11, ptr12; ptr21) de données et **en ce que** la logique (CL) de codage, qui est reliée de préférence à un poste (STW) d'aiguillage, à un ou plusieurs détecteurs (SENS) et/ou à une installation (LSA) de signalisation, est disposée à l'intérieur d'une station (R) de réponse prévue pour les premiers blocs (ptr) de données ou du côté du système (VLS) de guidage du trafic.

9. Système de communication suivant la revendication 7 ou 8, **caractérisé en ce que** les deuxièmes blocs (fd11, ..., fd1n ; fd21, ..., fd1m ; fd31, fd32) de données sont codés individuellement et son associés à des codes qui y correspondent et dont au moins l'un est fourni en fonction des données à transmettre par la logique (CL) de codage et est transmis avec les premiers blocs (ptr11, ptr12, ptr21) de données à la station (Q) d'interrogation.

10. Système de communication suivant la revendication 9, **caractérisé en ce qu'**il est prévu dans la station (Q) d'interrogation des moyens par lesquels une erreur peut être reconnue dans le cas où il n'a pas été transmis de code qui convient au deuxième bloc (fd11, ..., fd1n ; fd21, ..., fd1m ; fd31, fd32) de données transmis par une station (RB1, RB2 et RB3) de réponse.

11. Système de communication suivant l'une des revendications 7 à 10, **caractérisé en ce qu'**il est prévu dans la station (Q) d'interrogation un code spécifique à un véhicule, à un réseau du trajet et/ou à un système qui peut être combiné ou lié aux données de code à transmettre et **en ce que** ces données d'état reconnues comme valables peuvent, après la transmission des premiers et deuxièmes blocs (ptr11, ptr12, ptr21 ; fd11, ..., fd1n ; fd21, ..., fd1m ; fd31, fd32) de données, être identifiées à l'aide des codes composés dans les postes (Q) d'interrogation.
